# EUROPÄISCHE PATENTANMELDUNG

(11) **EP 2 270 702 A1**
(43) Veröffentlichungstag der Anmeldung: **05.01.2011**
(21) Anmeldenummer: 10165952.2
(22) Anmeldetag: 15.06.2010
(51) Int. Cl.: G06F 21/00, H04L 29/06, G06F 17/30

(54) **Gerät und Verfahren zur Erstellung eines sicheren Zugangs zu einem webbasierten zugangsbeschränkten Dienst**

(30) Priorität: 23.06.2009 DE 102009030242
(71) Anmelder: Lauer, Hans-Martin, 80997 München (DE)
(72) Erfinder: Lauer, Hans-Martin, 80997 München (DE)
(74) Vertreter: Hannke, Christian

(57) **Zusammenfassung**

Die Erfindung betrifft ein Gerät (100) und ein Verfahren zur Erstellung eines sicheren Zugangs zu einem webbasierten zugangsbeschränkten Dienst, bei welchem ein Dienstanbieter im Web vorbestimmte Webinhalte (310) nur über einen mit Sicherheitswerkzeugen gesicherten Zugang bereitstellt. Das Gerät hat eine erste Speichereinrichtung (110), eine Kommunikationsverbindungsaufbaueinrichtung (130), eine Anmeldeeinrichtung (170) und eine Steuereinrichtung (140). In der ersten Speichereinrichtung (110) sind Zugangsberechtigungsdaten (112) für den Zugang zu dem webbasierten zugangsbeschränkten Dienst gespeichert. Die Kommunikationsverbindungsaufbaueinrichtung (130) dient zum Aufbau einer Kommunikationsverbindung zu dem Dienstanbieter über Kommunikationseinrichtungen eines Hostcomputers (200), wenn das Gerät (100) an den Hostcomputer (200) angeschlossen wird. Die Anmeldeeinrichtung (170) dient zur Steuerung einer Dienstanmeldeprozedur zur Erstellung des sicheren Zugangs zu dem webbasierten zugangsbeschränkten Dienst über die aufgebaute Kommunikationsverbindung auf der Grundlage der in der Speichereinrichtung (110) gespeicherten Zugangsberechtigungsdaten (112). Die Steuereinrichtung dient (140) zur Steuerung der Kommunikation zwischen Gerät (100) und Hostcomputer (200) über die aufgebaute Kommunikationsverbindung.

## Beschreibung

Die Erfindung betrifft ein Gerät und ein Verfahren zur Erstellung eines sicheren Zugangs zu einem webbasierten zugangsbeschränkten Dienst.

Im Alltag spielt das Internet eine immer wichtigere Rolle, sowohl im Privat-, als auch im Geschäftsbereich. Das Internet ist eine der wichtigsten Informationsquellen. Die Bedeutung des Internets als Basis kommerzieller Dienstleistungen ist weiter steigend und wird durch den zunehmend flächendeckenden, permanenten und mobilen Internetzugang in vielen Bereichen erst ermöglicht. Eine wesentliche Rolle beim Anbieten webbasierter Dienstleistungen spielt die Individualisierung des Zugangs, womit folgende Ziele erreicht werden:
a) Customizing: Das webbasierte Dienst kann exakt an die Kundenbedürfnisse angepasst werden. Die dafür notwendigen Einstellungen kann der Kunde entweder selbst vornehmen, oder sie werden aus den gesammelten kundenspezifischen Informationen, wie z.B. Nutzungsverhalten abgeleitet und automatisiert vorgenommen.
b) Prozessoptimierung: Durch einen individualisierten Zugang können einmal vorgenommene Benutzereingaben persistent gespeichert werden. Damit können häufig wiederkehrende Prozessschritte vereinfacht werden. (Beispiel: Eingabe der Zahlungsmodalitäten im Onlineshop).
c) Data Mining: Die Möglichkeit, mittels individualisiertem Zugang das Benutzerverhalten detailliert ermitteln zu können und dieses besser zu verstehen, ist die Grundlage für vielfältige Möglichkeiten, die Kundenbeziehung aktiv zu fördern und zu unterstützen. Was die Kundenkarte im physischen Endkundengeschäft leistet, schafft der individualisierte Zugang in der virtuellen Welt.
d) Zugangssicherung: Ein individualisierter Zugang ist die Voraussetzung dafür, geschützte und vertrauliche Inhalte und Leistungen im offenen Netzwerk anbieten zu können. Nur mit einem Authentifizierungsprozess kann sichergestellt werden, dass ausschließlich der berechtigte Benutzerkreis Zugriff auf die Leistungen und Inhalte bekommt.

Mit dem Begriff "individualisiert" ist in dieser Beschreibung ein auf einen Benutzer zugeschnittener Dienst gemeint. Dabei kann der Nutzer eine Person, eine Personengruppe, eine Maschine, eine Gruppe von Maschinen oder jedwede andere Untergruppe einer Menge möglicher Nutzer eines webbasierten Dienstes sein.

Um einen individualisierten Zugang zu webbasierten Diensten zu ermöglichen, sind verschiedene Technologien im Einsatz. Folgende Elemente bilden derzeit in unterschiedlicher Zusammensetzung die gebräuchlichen Identifizierungsmerkmale:
- Benutzerkennung: In jedem Fall wird eine eindeutige Benutzerkennung benötigt. Diese kann frei wählbar sein solange diese noch nicht verwendet wird (z.B. persönliche Email Adresse bei einem Anbieter kostenloser Emaildienste), sie kann durch den Dienstanbieter vorgegeben werden (z.B. Kontonummer für Onlinebanking) oder sie wird automatisch erzeugt.
- Passwort: In der Regel wird der individualisierte Zugang durch ein Passwort vor unberechtigtem Zugriff geschützt. Dieses Passwort kann bestimmten Anforderungen unterliegen in Bezug auf Länge, verwendeten Zeichenvorrat, Gültigkeitsdauer, mindeste Änderungen zum vorher verwendeten Passwort, etc.
- RSA Schlüssel: Um beispielsweise den Anmeldeprozess zu VPN Netzen noch sicherer zu gestalten, kann ein Gerät verwendet werden, dass fortlaufend Schlüssel erzeugt, die nur für einen kurze Zeit gültig sind. Diese werden abgelesen und noch während der Gültigkeitsdauer im Anmeldefenster eingegeben. Der hinterlegte Algorithmus und der Zeitpunkt sind dem Netzwerkpartner bekannt, darüber wird die Korrektheit des eingegebenen Schlüssels überprüft. Jeder Schlüssel ist genau einmal verwendbar. Damit stellt sogar ein öffentliches Bekanntwerden dieses Schlüssels keine Gefahr dar.

- Smart Card: Ein ähnliches Verfahren wird bei der Verwendung von Smartcards angewendet. Diese werden über ein Lesegerät eingebunden und liefern während des Anmeldeprozesses zusätzliche Authentifizierungsinformationen.
- Transaktionsnummern (TAN): Der Dienstanbieter erstellt eine Liste an Codes, die dem Benutzer gesondert zugänglich gemacht wird, z.B. per Post oder SMS. Im Falle von besonders sicherheitskritischen Aktionen fragt er einzelne Werte dieser Liste ab. Diese Werte sind danach nicht mehr verwendbar und ungültig.
- Biometrie / Biomorphologie: Ein besondere Form der Authentifizierung stellt das Erkennen von Körpereigenschaften dar, wie z.B. Fingerabdruck, Irisabtastung, Gesicht, Bewegungsprofil oder Stimmerkennung. Alle diese Verfahren setzen voraus, dass die zur Authentifizierung herangezogene Körpereigenschaft im Rahmen eines initialen Prozesses dem überprüfenden System bekannt gemacht und mit einem Benutzerzugang verknüpft wird.

Die Einrichtung eines Benutzerzugangs zu einem webbasierten zugangsbeschränkten Dienst ist entweder durch den Dienstanbieter oder durch den Benutzer möglich.

Bei Einrichtung eines Benutzerzugangs durch den Dienstanbieter wird folgendermaßen vorgegangen. Sind dem Dienstanbieter bereits die relevanten Daten des Benutzers bekannt, so kann dieser einen entsprechenden Benutzerzugang einrichten. Dies findet beispielsweise bei der Nutzung von Onlinebanking statt. In diesen Fällen ist die Nummer des Bankkontos gleichzeitig die Benutzerkennung. Der Dienstanbieter erstellt ein Initialpasswort, dass dem Benutzer auf einem sicheren Weg zugänglich gemacht wird. Mit diesem Passwort und der Benutzerkennung gelingt die erste Anmeldung. Während dieser Anmeldung wird der Benutzer aufgefordert, das Passwort zu ändern.

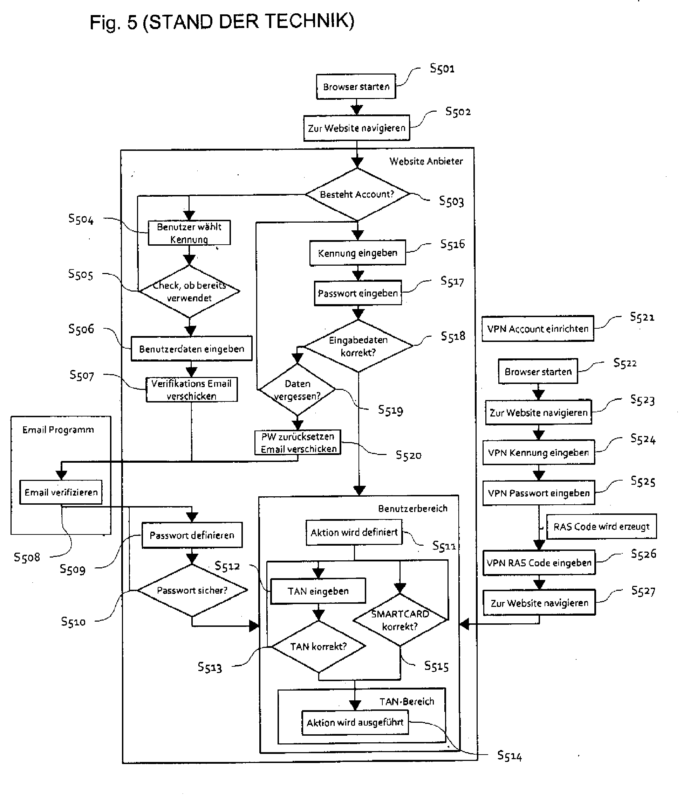

Bei Einrichtung eines Benutzerzugangs durch den Benutzer wird, wie in Fig. 5 gezeigt, folgendermaßen vorgegangen. In der Regel muss zur Einrichtung eines Zugangs der Benutzer selber aktiv werden. Dazu bieten die Einstiegsseiten der Dienstanbieter entsprechende Optionen. Der Benutzer öffnet dazu zunächst den Webbrowser (S501) und navigiert zur Website des Dienstanbieters (Schritt S502). Dort findet er einen Bereich zur Neueinrichtung eines Zugangs (Schritt S503) und wählt dort eine Benutzerkennung und ein Passwort aus (Schritt S504). Danach werden die Benutzerkennung und das Passwort noch nach verschiedenen Kriterien überprüft (Schritt S505). Sollten diese Kriterien nicht erfüllt sein, so wird nach Abweisung ein neuer Vorschlag erbeten und der Fluss geht zurück zu Schritt S504. Sind dagegen die Kriterien erfüllt, wird der Benutzer aufgefordert eine Adresse, unter der er eine Authentifizierungsnachricht empfangen kann, sowie in der Regel zahlreiche weitere Daten anzugeben, die den Zwecken des Data Mining dienen (Schritt S506). Sobald die vom Benutzer gewählten Daten akzeptiert sind, wird eine Authentifizierungsnachricht bzw. Verifikations-Email verschickt (Schritt S507), deren Empfang der Benutzer bestätigt (Schritt S508). Damit ist sichergestellt, dass der Dienstanbieter über eine korrekte Kontaktadresse des Benutzers verfügt. Daraufhin kann der Benutzer ein Passwort definieren (Schritt S509), welches bei Schritt S51 0 auf Sicherheit hin überprüft wird. Ist das Passwort sicher, erhält der Benutzer Zugang zu einem Benutzerbereich freigeschaltet, in welchem dem Benutzer speziell zugeschnittene Dienste, wie beispielsweise in Schritt S511 bis S515 gezeigt, zur Verfügung stehen.

Zu einer späteren Anmeldung bei dem Dienstanbieter öffnet der Benutzer dazu wieder zunächst den Webbrowser (Schritt S501) und navigiert zur Website des Dienstanbieters (Schritt S502). Falls schon eine Registrierung bzw. Account bei dem Dienstanbieter besteht (JA bei Schritt S503) gibt er im Login-Bereich seine Benutzerkennung (Schritt S516) sowie das Passwort bekannt (Schritt S517). Nach Überprüfung der Daten auf der Seite des Dienstanbieters (Schritt S518) wird der Zugang zu dem zuvor genannten Benutzerbereich freigeschaltet, wenn die Daten korrekt sind. Die Eingabe von Benutzerkennung und Passwort kann durch das Erfassen biometrischer Merkmale ersetzt werden, wenn diese bei der Einrichtung des Zugangs entsprechend erfasst wurden. Bei einer Anmeldung über Remote Access / VPN, die in Schritt S521 bis S527 in Fig. 5 dargestellt ist, werden zusätzlich zur Abfrage der genannten Daten gegebenenfalls weitere Sicherheitskriterien abgefragt, wie RSA Schlüssel, Smartcard, TAN oder ähnliches.

Schlägt der Anmeldeversuch fehl, so wird der Benutzer gefragt, ob er einen Teil der Daten vergessen habe (Schritt S519). In diesem Fall wird ihm angeboten, das Einrichten des Passwortes neu durchzuführen. Dies geschieht dann, wie bereits bei der Einrichtung eines Benutzerzugangs über eine zu bestätigende Authentifizierungsnachricht (Schritt S520).

Der Anmeldeprozess, wie auch der Zugriff auf die individualisiert freigegebenen Inhalte kann wahlweise über eine verschlüsselte Verbindung geschehen, um ein Mithören der Anmeldedaten, wie auch der übertragenen Inhalte zu verhindern.

Aus der Nutzung individualisierter Webinhalte ergeben sich für Dienstanbieter, wie für Benutzer erhebliche Vorteile. Diesen Vorteilen steht entgegen, dass sowohl beim Einrichten des Zugangs, als auch beim in der Folge notwendigen Anmelden des Benutzers ein erheblicher Aufwand entsteht, der in der Praxis oft dazu führt, dass der individualisierte Zugang nicht, oder nicht ausreichend genutzt wird. Unabhängig vom Aufwand besteht das Risiko, die Zugangsdaten zu verlieren, oder diese in der Fülle von Emails, Lesezeichen und Dateien nicht ausreichend einfach wiederzufinden.

Im Einzelnen ergeben sich bei dem zuvor beschriebenen Stand der Technik die folgenden Nachteile für den Benutzer:
a1) Um Zugriff auf individualisierte Webinhalte zu erhalten, ist ein zweistufiger Prozess notwendig: Das Einrichten eines Zugangs, sowie die Anmeldung des Benutzers. Schon beim Einrichten des Zugangs ist der Benutzer stark eingebunden. Zunächst muss er einen Webbrowser öffnen und diesen durch Eingabe der korrekten Webadresse des Dienstanbieters auf dessen Seite navigieren. Nun ist er gezwungen, neben der Eingabe persönlicher Daten Zugangskennung und Passwort zu generieren, sowie diese in der Folge sicher aufzubewahren und zugreifbar zu halten. Neben diesen Daten benötigt er zwingend die Webadresse, über die er die Dienste des Dienstanbieters erreichen kann. Auch diese Adresse muss er nun geeignet aufbewahren und zugreifbar halten. Wenn dies beispielsweise über ein Lesezeichen des Webbrowsers geschieht, so hat er Sorge dafür zu tragen, dass dieses Lesezeichen auch bei einem Wechsel des PCs zugreifbar bleibt.
a2) Um dem Dienstanbieter nun eine gültige Kontaktadresse zur Verfügung zu stellen, ist es notwendig, den Empfang einer Authentifizierungsnachricht zu bestätigen. Dies geschieht entweder per Post, per Email oder per Telefax und erfordert weiteren Aufwand. Selbst wenn der Benutzerzugang durch den Dienstanbieter eingerichtet wird und dem Benutzer die Zugangsdaten gesondert zugänglich gemacht werden, so ist der Benutzer dennoch gezwungen, diese Zugangsdaten geeignet aufzubewahren, zugreifbar zu halten und in den Webbrowser zu übertragen.
a3) Ist der Benutzerzugang einmal eingerichtet, so ist immer noch ein nicht unbeträchtlicher Aufwand notwendig, um den individualisierten Webinhalt zu nutzen. So muss auch hierzu zunächst der Webbrowser geöffnet werden und durch Eingabe der korrekten Adresse auf die Anmeldeseite des Dienstanbieters navigiert werden, wo wiederum Zugangskennung und Passwort korrekt eingegeben werden müssen, bevor der individualisierte Inhalt des Dienstanbieters für den Benutzer zugreifbar ist.

Zudem ergeben sich die folgenden Nachteile für den Dienstanbieter:
b1) Je höher der Aufwand ist, auf die Webinhalte des Dienstanbieters zuzugreifen, umso größer ist das Risiko, dass diese Inhalte nicht genutzt werden. Selbst wenn der Nutzen für den Benutzer sehr hoch ist, so würde sich dieser ihm möglicherweise erst bei der Nutzung selber erschließen.
b2) Damit ist der einfache und unkomplizierte Zugang zu webbasierten individualisierten Diensten ein erfolgskritischer Faktor und mit dem heutigen Stand der Technik nicht zu erreichen.

Demzufolge liegt der vorliegenden Erfindung die Aufgabe zugrunde, ein Gerät und ein Verfahren zur Erstellung eines sicheren Zugangs zu einem webbasierten zugangsbeschränkten Dienst zur Verfügung zu stellen, mit welchen sowohl für einen Dienstanbieter als auch einen Benutzer eines webbasierten zugangsbeschränkten Dienstes ein einfacher und sicherer Zugang zu dem webbasierten zugangsbeschränkten Dienst gewährleistet ist, so dass die zuvor genannten Nachteile des Standes der Technik behoben sind.

Diese Aufgabe wird durch ein Gerät gemäß den Merkmalen des Patentanspruchs 1 gelöst. Das Gerät dient zur Erstellung eines sicheren Zugangs zu einem webbasierten zugangsbeschränkten Dienst, bei welchem ein Dienstanbieter im Web vorbestimmte Webinhalte nur über einen mit Sicherheitswerkzeugen gesicherten Zugang bereitstellt. Das Gerät hat eine erste Speichereinrichtung, eine Kommunikationsverbindungsaufbaueinrichtung und eine Steuereinrichtung. In der ersten Speichereinrichtung sind Zugangsberechtigungsdaten für den Zugang zu dem webbasierten zugangsbeschränkten Dienst gespeichert. Die Kommunikationsverbindungsaufbaueinrichtung dient zum Aufbau einer Kommunikationsverbindung zu dem Dienstanbieter über Kommunikationseinrichtungen eines Hostcomputers, wenn das Gerät an den Hostcomputer angeschlossen wird. Die Anmeldeeinrichtung dient zur Steuerung einer Dienstanmeldeprozedur zur Erstellung des sicheren Zugangs zu dem webbasierten zugangsbeschränkten Dienst über die aufgebaute Kommunikationsverbindung auf der Grundlage der in der Speichereinrichtung gespeicherten Zugangsberechtigungsdaten. Die Steuereinrichtung dient zur Steuerung der Kommunikation zwischen Gerät und Hostcomputer über die aufgebaute Kommunikationsverbindung.

Weitere vorteilhafte Ausgestaltungen des Geräts ergeben sich aus den Unteransprüchen.

Die Kommunikationsverbindungsaufbaueinrichtung kann eine Bestimmungseinrichtung aufweisen zur Bestimmung von verfügbaren Kommunikationseinrichtungen des an das Gerät anschließbaren Hostcomputers, wenn an das Gerät ein Hostcomputer angeschlossen ist.

Das Gerät kann zudem mit einer Berücksichtigungseinrichtung zur automatischen Berücksichtigung der von der Bestimmungseinrichtung bestimmten verfügbaren Kommunikationseinrichtungen des Hostcomputers ausgestattet sein.

Die Sicherheitswerkzeuge können eine Benutzerkennung und/oder ein Passwort und/oder biometrische oder biomorphologische Daten und/oder ein Pfandtoken und/oder Transaktionsnummern sein.

Außerdem kann das Gerät eine Anzeigeeinrichtung zur Anzeige der von dem Dienstanbieter bereitgestellten Webinhalte aufweisen, wobei die Anzeigeeinrichtung die graphische Benutzerschnittstelle des Hostcomputers zur Anzeige der Webinhalte verwendet.

Es ist möglich, dass das Gerät eine Eingabeeinrichtung zur Eingabe ergänzender Zugangsberechtigungsdaten hat.

Das Gerät kann eine erste Verschlüsselungseinrichtung zur Verschlüsselung der Zugangsberechtigungsdaten, so dass die Zugangsberechtigungsdaten in der Speichereinrichtung für einen Benutzer des Geräts nicht zugreifbar und/oder nicht lesbar gespeichert sind, und eine erste Entschlüsselungseinrichtung zur Entschlüsselung der Zugangsberechtigungsdaten aufweisen, so dass die Zugangsberechtigungsdaten in der Speichereinrichtung für einen Benutzer des Geräts zugreifbar und/oder lesbar gespeichert sind.

Bei dem Gerät können in der Speichereinrichtung Adressdaten des Dienstanbieters des webbasierten zugangsbeschränkten Diensts gespeichert sein. Hierbei kann das Gerät zudem eine zweite Verschlüsselungseinrichtung zur Verschlüsselung der Adressdaten des Dienstanbieters, so dass die Adressdaten des Dienstanbieters in der Speichereinrichtung für einen Benutzer des Geräts nicht zugreifbar und/oder nicht lesbar gespeichert sind, und eine zweite Entschlüsselungseinrichtung zur Entschlüsselung der Adressdaten des Dienstanbieters umfassen, so dass die Adressdaten des Dienstanbieters in der Speichereinrichtung für einen Benutzer des Geräts zugreifbar und/oder lesbar gespeichert sind.

Das Gerät kann zudem mit einer Migrationseinrichtung ausgestattet sein, die dahingehend ausgestaltet ist, dass sie alle für den Zugang zu dem webbasierten zugangsbeschränkten Dienst notwendigen Informationen und Einstellungen auf den Hostcomputer überträgt und dort lokal speichert, so dass ein Zugriff durch den Hostcomputer auf den webbasierten zugangsbeschränkten Dienst zukünftig auch ohne das Gerät möglich ist. Auf diese Weise ist eine Funktion vorhanden, die es ermöglicht, den Zugriff auf die genannten Dienste auch mittels eines hostcomputereigenen Browsers zu ermöglichen. Dazu werden die Zugangsberechtigungsdaten, wie beispielsweise Cookies, etc., auf den Hostcomputer überspielt und zwar in der Form, in der es der Standardbrowser dort erfordert.

Die zuvor genannte Aufgabe wird zudem durch ein Verfahren gemäß den Merkmalen des Patentanspruchs 10 gelöst. Das Verfahren dient zum Erstellen eines sicheren Zugangs zu einem webbasierten zugangsbeschränkten Dienst, bei welchem ein Dienstanbieter im Web vorbestimmte Webinhalte nur über einen mit Sicherheitswerkzeugen gesicherten Zugang bereitstellt. Das Verfahren hat die Schritte: Speichern, in einer ersten Speichereinrichtung, von Zugangsberechtigungsdaten für den Zugang zu dem webbasierten zugangsbeschränkten Dienst; Aufbauen einer Kommunikationsverbindung zu dem Dienstanbieter über Kommunikationseinrichtungen eines Hostcomputers, wenn das Gerät an den Hostcomputer angeschlossen wird; und Steuern einer Dienstanmeldeprozedur zur Erstellung des sicheren Zugangs zu dem webbasierten zugangsbeschränkten Dienst über die aufgebaute Kommunikationsverbindung auf der Grundlage der in der ersten Speichereinrichtung gespeicherten Zugangsberechtigungsdaten.

Mit der beschriebenen Erfindung wird der Aufwand, den ein Benutzer leisten muss, um auf individualisierte, webbasierte Inhalte zugreifen zu können, dramatisch reduziert. Der aufwändige Registrierungsprozess entfällt für ihn vollständig, ohne Abstriche an der Sicherheit oder Datenintegrität zu machen. Der Anmeldeprozess wird im Idealfall auf das Anschließen eines Zusatzgerätes reduziert. Damit ist der Weg geöffnet, um solche Inhalte wirksam anzubieten, deren Nutzung aufgrund der hohen Zugriffshürden bisher nur sehr eingeschränkt stattfindet.

Obwohl es sich um einen gesicherten Zugang zu den Inhalten des Dienstanbieters handelt, ist es nicht mehr notwendig, die Zugangsdaten verfügbar zu halten. Da die Zugangsberechtigungen im Zusatzgerät integriert sind, können keine Zugangsdaten vergessen werden oder verloren gehen. Werden zusätzlich zu den Identifikationsmerkmalen Benutzerkennung und Passwort weitere Sicherheitsmerkmale gewünscht, wie TAN, RSA-Token, Fingerprint, etc., dann können diese ebenfalls abgefragt werden.

Da bei dem beschriebenen Gerät und Verfahren die Zugangsberechtigungen im Gerät hinterlegt sind, kann es bei der Anmeldeprozedur zu keinerlei Eingabefehlern kommen. Die Notwendigkeit, die Zugangsdaten erneut einzugeben, wird damit wirksam unterbunden. Ebenso werden damit Hilfsprozeduren, wie das Zurücksetzen des Passwortes, Erzeugen eines temporären neuen Passwortes, erneutes Zusenden einer Authentifizierungsnachricht, Neusetzen eines benutzerdefinierten Passwortes, obsolet und reduzieren den Gesamtaufwand, den der Benutzer leisten muss, um den Zugang zu den individualisierten Diensten zu erlangen und zu behalten.

Nachfolgend wird die Erfindung unter Bezugnahme auf die beiliegenden Zeichnungen ausführlicher beschrieben. Es zeigen:
- Fig. 1: ein Blockschaltbild über eine Einbindung eines Geräts gemäß der vorliegenden Er- findung in ein System aus Gerät, Hostcomputer und Web-Server;
- Fig. 2: ein Flussdiagramm, welches den Ablauf bei Herstellung des Geräts sowohl auf Her- stellerseite als auch auf der Seite des individualisierten Dienstes darstellt;
- Fig. 3: ein Flussdiagramm, welches den Ablauf darstellt, wenn das Gerät mit einem Host- computer verbunden wird;
- Fig. 4: ein Flussdiagramm, welches den Ablauf bei einer Migrationsfunktion darstellt; und
- Fig. 5: ein Flussdiagramm, welches den Ablauf einer Anmeldung zu einem webbasierten zugangsbeschränkten Dienst gemäß dem Stand der Technik darstellt.

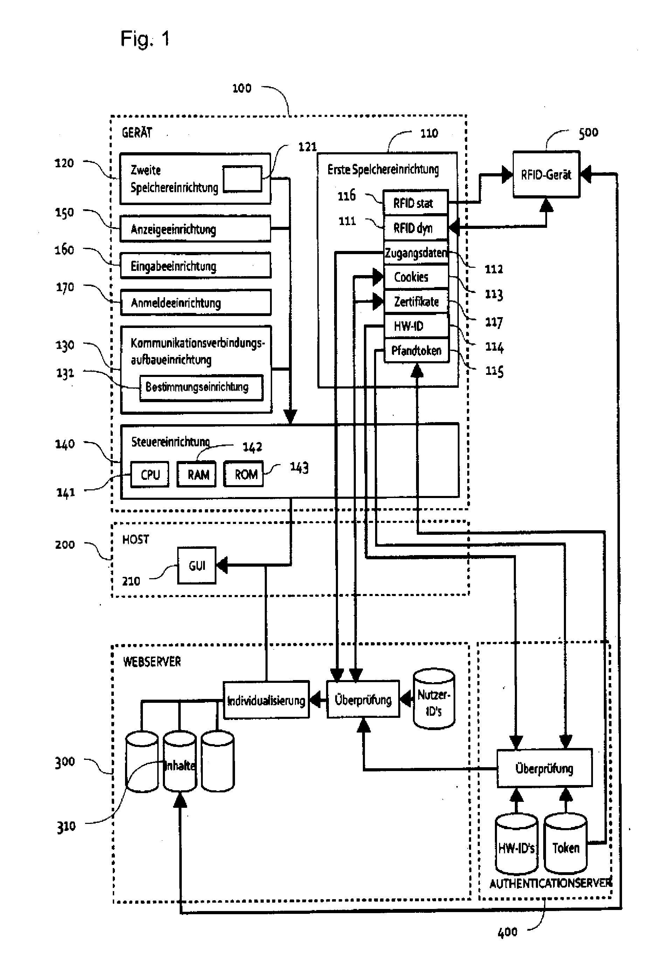

In Fig. 1 ist ein Gerät 100 gezeigt, welches eine erste Speichereinrichtung 110, eine zweite Speichereinrichtung 120, eine Kommunikationsaufbaueinrichtung 130, eine Bestimmungseinrichtung 131, eine Steuereinrichtung 140, eine Anzeigeeinrichtung 150, eine Eingabeeinrichtung 160, und eine Anmeldeeinrichtung 170 aufweist.

Das Gerät 100 ist in Fig. 1 mit einem Hostcomputer 200 verbunden, welcher wiederum mit einem Webserver 300 und einem Authentifizierungsserver 400 verbunden ist. Das Gerät 100 ist zudem über ein RFID-Gerät 500 an den Webserver 300 angeschlossen.

In der ersten Speichereinrichtung 110 sind dynamische Rundsendeidentifikationsdaten RFID dyn 111, Zugangsdaten bzw. Zugangsberechtigungsdaten 112, Cookies 113, eine Hardwareidentifikationsnummer bzw. Hardware-ID 114, ein Pfandtoken 115 und Zugangszertifikate bzw. Zertifikate 117 gespeichert. Zudem können statische Rundsendeidentifikationsdaten RFID stat 116 gespeichert sein. In der zweiten Speichereinrichtung 120 ist ein Programm 121 zur Ausführung einer Dienstanmeldeprozedur in dem Gerät gespeichert. Die in den Speichereinrichtungen 110 und 120 gespeicherten Daten werden nachfolgend auch als Gerätesoftware bezeichnet.

Im Betrieb kann das Programm 121 zur Ausführung einer Dienstanmeldeprozedur per Funk über die dynamischen Rundsendeidentifikationsdaten RFID dyn und/oder die statischen Rundsendeidentifikationsdaten RFID stat auf das RFID-Gerät 500 zugreifen, über welchen ein Zugang zu dem Webserver 300 hergestellt werden kann. Das Gerät 100 kann also eine mittels Hochfrequenzfunk von außen auslesbare eindeutige und statische Kennung RFID stat beinhalten, die logisch mit den auf dem Gerät 100 hinterlegten Zugangsberechtigungsdaten 112 verknüpft werden kann.

Das Gerät kann zusätzlich weitere Informationen über Hochfrequenzfunk von außen auslesbar bereithalten, die über Hochfrequenzfunk von außen auch verändert werden können. Eine solche dynamische Kennung ist die in Fig. 1 gezeigte und mit RFID dyn bezeichneten dynamische Rundsendeidentifikationsdaten RFID dyn 111. Zudem können die über Hochfrequenzfunk von außen veränderbaren Daten auch für die Gerätesoftware, wie beispielsweise das Programm 121, elektrisch zur Verfügung stehen und von dieser genutzt werden. Außerdem können die über Hochfrequenzfunk von außen veränderbaren Daten auch durch die Gerätesoftware, wie beispielsweise das Programm 121, selber verändert werden.

Falls jedoch der Zugang zu dem Webserver 300 statt über ein RFID-Gerät 500 über einen Hostcomputer 200 hergestellt werden soll, muss das Gerät 100 mit dem Hostcomputer verbunden werden. Dadurch kann das Gerät 100 über den Hostcomputer 200 auf den Webserver 300 zugreifen und sich zu ihm einen Zugang verschaffen, wie später ausführlich beschrieben. Zudem kann das Gerät 100 über den Hostcomputer 200 auf einen Authentifizierungsserver 400 zugreifen, um eine Überprüfung des Zugriffs zum Webserver 300 zu authentifizieren, wie später ausführlich beschrieben. Die Verbindung zu dem RFID-Gerät 500 ist optional, jedoch kann sie auch zusätzlich zu der Verbindung mittels Hostcomputer 200 bereitgestellt sein.

Die Steuereinrichtung 140 weist einen Mikrocomputer mit einer zentralen Verarbeitungseinheit (CPU) 141, einem Nur-Lese-Speicher (ROM) 142 und einem Speicher mit wahlfreiem Zugriff (RAM) 143 auf. Die CPU 141 führt alle Betriebe der Steuereinrichtung 140 aus. In dem ROM 142 sind nichtveränderbare Daten gespeichert und das RAM 143 dient als Arbeitsspeicher des Mikrocomputers.

Der Mikrocomputer stellt die Kommunikation zwischen dem Gerät 100 und dem Hostcomputer 200 sicher. Dadurch können die im Gerät 100 hinterlegten Einrichtungen auf den Hostcomputer 200 geladen und dort ausgeführt werden. Die Kommunikationsverbindungsaufbaueinrichtung 130 dient zum Aufbau einer Kommunikationsverbindung zu dem Webserver 300, welcher nachfolgend auch als Dienstanbieter eines Webinhalts 310 bezeichnet wird, über Kommunikationseinrichtungen des Hostcomputers 200, wenn das Gerät 100 an den Hostcomputer 200 angeschlossen wird. Hierzu kann die Bestimmungseinrichtung 131 hostcomputerspezifische Zugangswege zu netzbasierten Diensten mit deren Einschränkungen bestimmen. Das Gerät kann über eine nicht dargestellte Berücksichtigungseinrichtung verfügen welche diese hostcomputerspezifischen Zugangswege zur Erlangung des Zugriffs zu den bestimmten zugriffsgeschützten, (individualisierten,) netzbasierten Diensten durch den Hostcomputer zur automatischen Verwendung verfügbar macht. Bei einem in ein lokales Netzwerk (LAN) eingebundenen Hostcomputer 200 handelt es sich hierbei um die mittels eines Proxyservers freigeschalteten Zugangswege.

Aus der vorangehenden Beschreibung ergibt sich, dass das Gerät 100 in der Lage ist, die Zugangsberechtigungsdaten 112 zur Erlangung des Zugriffs zu dem Webserver 300 automatisch heranzuziehen und die Kommunikationsverbindung mit dem Hostcomputer 200 und schließlich dem Webserver 300 bzw. Dienstanbieter von bestimmten zugriffsgeschützten, (individualisierten,) netzbasierten Diensten automatisch aufzubauen.

Das Gerät 100 kann geeignet sein, Informationspakete des Dienstanbieters der bestimmten zugriffsgeschützten, (individualisierten,) netzbasierten Diensten, die den momentanen Zustand der Nutzung dieser Dienste durch den Benutzer kennzeichnen, zu speichern und diese zu Beginn der nächsten Anwendung des Gerätes 100 dem Dienstanbieter zum Zwecke der Identifikation zurück zu senden. Hierbei kann es sich um die zuvor genannten Cookies 113 handeln. Die vom Dienstanbieter von den bestimmten zugriffsgeschützten, (individualisierten,) netzbasierten Diensten gelieferten Informationen für den Benutzer können nicht zugreifbar und / oder nicht lesbar in dem Gerät 100 abgelegt sein.

Die bei Ausführung des Programms 121 erzielten Ergebnisse werden mittels der Anzeigeeinrichtung 150 auf der graphischen Benutzerschnittstelle (GUI) 210 des Hostcomputers 200 angezeigt. Die Anzeigeeinrichtung 150 kann auch als Browser bezeichnet werden. Der Ablauf des Programms 121 kann zudem über die Eingabeeinrichtung 160 beeinflusst werden, indem ein Benutzer des Geräts 100 insbesondere ergänzende Zugangsberechtigungsdaten, wie beispielsweise eine zusätzliche PIN, Rhythmussequenz, etc. eingibt. Die Eingabeeinrichtung 160 kann insbesondere eine Tastatur sein.

Die Anmeldeeinrichtung 170 dient zur Steuerung einer Dienstanmeldeprozedur zur Erstellung des sicheren Zugangs zu dem Webserver 300 über die aufgebaute Kommunikationsverbindung auf der Grundlage der in der ersten Speichereinrichtung 110 gespeicherten Zugangsberechtigungsdaten 112.

Zur Ermöglichung eines ersten Kopierschutzes kann eine Verknüpfung mit der Hardware-ID 114 des Geräts 100 vorgenommen sein bzw. werden. Hierzu können die Zugangsberechtigungsdaten 112 des Geräts 100 eine nichtveränderbare, eindeutige Kennung beinhalten, die im Gerät 100 fest eingebaut ist.

Zur Ermöglichung eines zweiten Kopierschutzes können bei dem Gerät 100 dessen Zugangsberechtigungsdaten 112 oder Teile davon nach jedem Zugang zu den bestimmten zugriffsgeschützten, (individualisierten,) netzbasierten Diensten geändert werden. Diese Änderung kann durch das Gerät 100 selbst, durch den Dienstanbieter des bestimmten zugriffsgeschützten, (individualisierten,) netzbasierten Dienstes oder durch einen Dritten erfolgen. Ein solcher Kopierschutz kann mittels eines Pfandtokens 115 bewerkstelligt werden. Der zweite Kopierschutz ist realisiert, da es immer nur einen gültigen Pfandtoken geben kann. Von allen unzulässigerweise kopierten Pfandtoken 115 ist nur genau einer genau einmal verwendbar.

Die Zugangszertifikate bzw. Zertifikate 117 in der ersten Speichereinrichtung 117 können beispielsweise zur sicheren Übertragung von Emails herangezogen werden. Die Zertifikate 117 können aber auch zur sicheren Identifizierung eines Kommunikationspartners generell Verwendung finden. Ein solcher Kommunikationspartner ist in diesem Fall ein Benutzer des Geräts, welcher von dem Webserver 300 die zugriffsgeschützten, (individualisierten,) netzbasierten Dienste bzw. Webinhalte 310 anfordert.

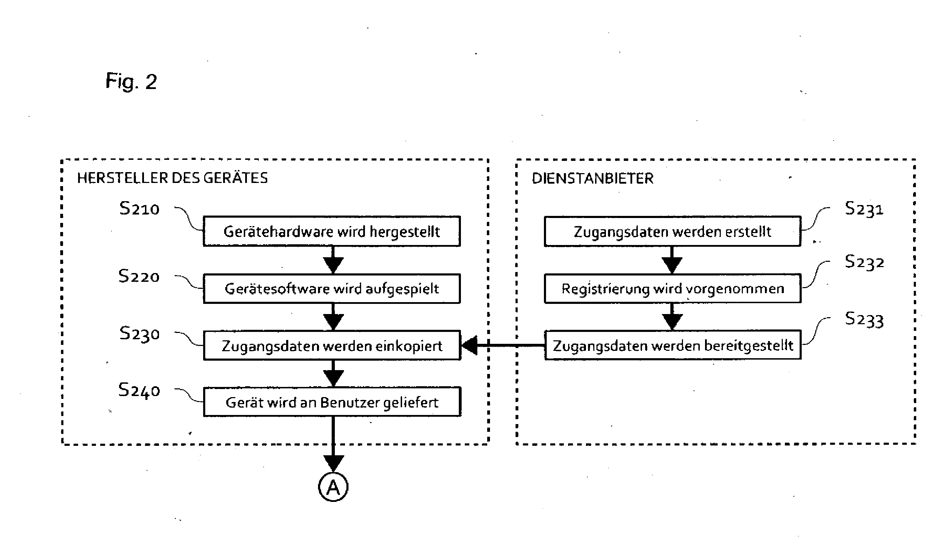

Für die folgenden Beschreibungen der Fig. 2 bis Fig. 4 ist als Beispiel eine Ausführung als Gerät 100 mit USB-Schnittstelle gewählt worden, sowie als ein Hostcomputer 200 ein PC mit Windows-Betriebssystem. Als Netzwerk ist das Internet angenommen.

Bei der Geräteherstellung wird bei dem Hersteller des Geräts 100, wie in Fig. 2 gezeigt, zuerst die Gerätehardware hergestellt (Schritt S210). Daraufhin kann die Gerätesoftware aufgespielt bzw. gespeichert werden (Schritt S220). Anschließend werden in die erste Speichereinrichtung (Fig. 1) Zugangsdaten bzw. Zugangsberechtigungsdaten 112 einkopiert (S230). Hierfür muss auf dem Server des Dienstanbieters, das heißt dem Webserver 300, zuerst ein neuer Benutzer angelegt werden (Schritt S231). Dazu wird eine Registrierung des neuen Benutzers vorgenommen (Schritt S232). Hierbei können bereits vorhandene Kundendaten um Zugangsberechtigungsdaten 112 ergänzt werden. Dies sind in der Regel eine Webadresse, ein Zugangsname und ein Passwort. Diese Zugangsberechtigungsdaten 112 werden nun an den Gerätehersteller übermittelt (S233), der diese bei dem zuvor erwähnten Schritt S230 fest in einem Gerät 100 ablegt. Danach kann das Gerät 100 an den Benutzer ausgeliefert werden (Schritt S240).

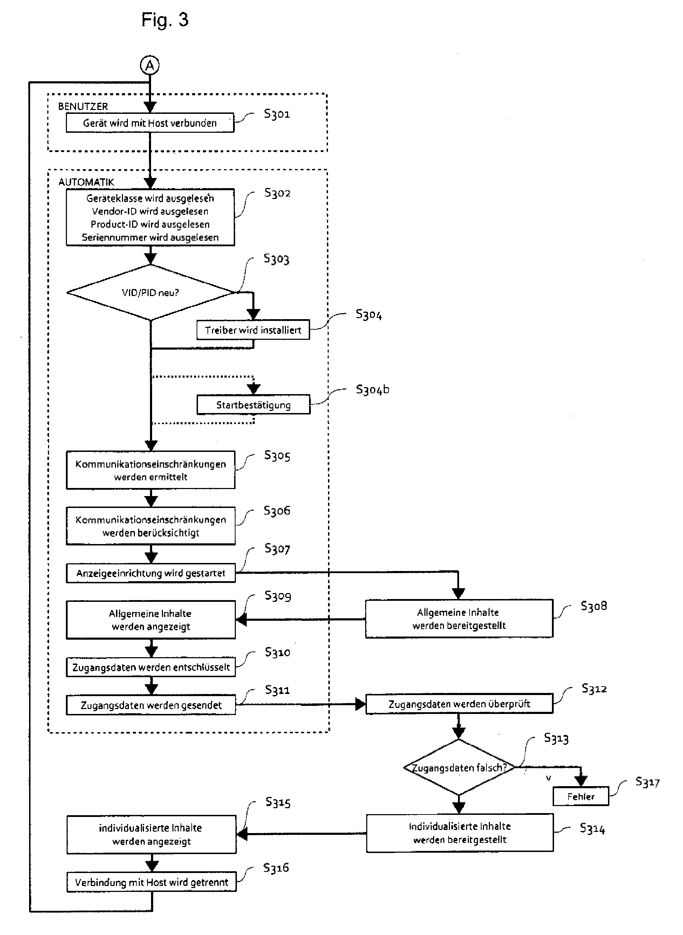

Bei der Gerätenutzung, wie in Fig. 3 gezeigt, verbindet der Benutzer das Gerät 100 mit dem Hostcomputer 200 (Schritt S301), woraufhin das Gerät 100 automatisch die Startprozedur durchläuft, bei welcher beispielsweise die Geräteklasse, die Hersteller bzw. Verkäufer-Identifikationsnummer (Hersteller bzw. Verkäufer- ID), die Produkt-Identifikationsnummer (Produkt-ID) und die Seriennummer ausgelesen wird.

Ist das Gerät 100 mit dem dazugehörigen Datensatz, bestehend aus Geräteklasse, Hersteller bzw. Verkäufer-Identifikationsnummer, Produkt-Identifikationsnummer für den PC neu (JA bei Schritt S303), so wird zunächst der entsprechende (nicht dargestellte) Gerätetreiber (Schritt S304) auf den Hostcomputer 200 geladen und der Fluss geht zu Schritt S305 weiter. Andernfalls (NEIN bei Schritt S303) geht der Fluss von Schritt S303 direkt zu Schritt S305 weiter. Abhängig von der Konfiguration des Hostcomputers 200 wird vor dem nächsten Schritt eine Bestätigung des Benutzers bei Schritt S305b erwartet, den der Benutzer beispielsweise mit einer externen Maus oder einem Mauspad bzw. einer Mausbedienfläche am Hostcomputer 200 vornehmen kann. Bei Schritt S305 werden die Kommunikationseinschränkungen für die Kommunikation des Hostcomputers 200 mit dem Internet ermittelt und im nächsten Schritt S306 berücksichtigt und der Anzeigeeinrichtung 150 bekannt gegeben, so dass diese entsprechend parametriert werden kann.

Danach wird bei Schritt S307 die Anzeigeeinrichtung 150 gestartet, die Webadresse des Dienstanbieters angewählt. Bei erfolgreicher Einwahl in die Webadresse, werden allgemeine Inhalte der Webadresse des Dienstanbieters von dem Dienstanbieter bereitgestellt (Schritt S308). Daraufhin können die allgemeinen Inhalte der Webadresse des Dienstanbieters auf der Anzeigeeinrichtung 150 des Gerätes 100 angezeigt werden (S309). Im nächsten Schritt werden bei Schritt S310 die Zugangsdaten bzw. Zugangsberechtigungsdaten 112 für den Webserver 300 des Dienstanbieters entschlüsselt und bei Schritt S311 an den Webserver 300 des Dienstanbieters gesendet. Werden diese dort als gültig akzeptiert (Schritt S312 und JA bei Schritt S313), stellt der Webserver 300 die individualisierten Webinhalte 310 für diesen Benutzer bereit und schaltet sie frei (Schritt S314). Dadurch können die individualisierten Webinhalte 310 für diesen Benutzer durch die Anzeigeeinrichtung 150 auf der Graphischen Benutzerschnittstelle (GUI) des Hostcomputers 200 angezeigt werden (S315). Nach Beenden der Nutzung wird das Gerät 100 vom Hostcomputer 200 getrennt.

Werden die Zugangsdaten bzw. Zugangsberechtigungsdaten 112 bei dem Webserver 300 des Dienstanbieters als ungültig bewertet (Schritt S312 und NEIN bei Schritt S313), stellt der Webserver 300 die individualisierten Webinhalte 310 für diesen Benutzer nicht bereit (Schritt S314). In diesem Fall wird eine entsprechende Fehlermeldung durch die Anzeigeeinrichtung 150 auf der graphischen Benutzerschnittstelle (GUI) des Hostcomputers 200 angezeigt werden (Schritt S317).

Möchte der Benutzer den Dienst des Dienstanbieters ein weiteres Mal nutzen, so verbindet er das Gerät 100 wiederum mit dem Hostcomputer 200 (Schritt S301) und die Startprozedur (Schritt S302 bis Schritt S313) wird wie beim ersten Mal durchlaufen, mit dem Unterschied, dass eine Installation des Gerätetreibers bei Schritt S304 nicht mehr notwendig ist.

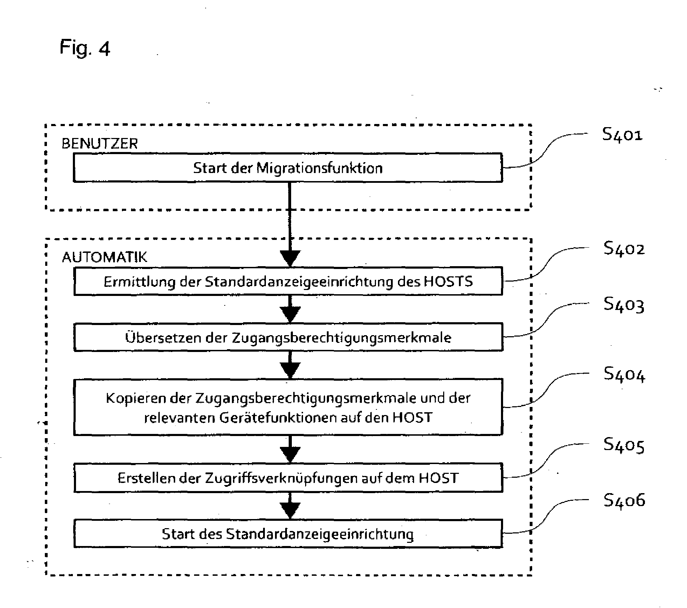

Wünscht der Benutzer, die Gerätefunktion zukünftig nutzen zu können, ohne das Gerät 100 physisch vorhalten zu müssen, so kann die Gerätefunktion auf den Hostcomputer 200 migriert werden. Ein möglicher Vorgang dazu ist in Fig. 4 gezeigt, bei welchem der Benutzer bei Schritt S401 die Migrationsfunktion startet, was den folgende automatisch ablaufende Prozedur in Gang setzt. Die Migrationsfunktion ist in den Ansprüchen auch als Migrationseinrichtung bezeichnet.

Bei Schritt S402 wird zunächst die (nicht dargestellte) Standardanzeigeeinrichtung des Hostcomputers 200 ermittelt. Danach werden die relevanten Gerätefunktionen so übersetzt (Schritt S403), dass diese in Zusammenspiel mit dieser Standardanzeigeeinrichtung funktionieren. Danach werden diese auf den Hostcomputer 200 überspielt (Schritt S404). Abschließend werden entsprechende Zugriffsverknüpfungen auf dem Hostcomputer 200 erstellt, um die Funktion schnell und bequem ausführen zu können (S405). Danach kann die Standardanzeigeeinrichtung des Hostcomputers 200 gestartet werden.

Somit beschreibt die Erfindung ein Gerät 100 und ein Verfahren, welche den Zugriff auf einen webbasierten individualisierten Dienst bzw. Angebot gegenüber dem Stand der Technik stark vereinfachen. Bei dem Gerät 100 handelt es sich dabei um ein personalisiertes Zusatzgerät, das mit dem Hostcomputer 200 des Nutzers verbunden wird. Durch automatischen oder manuell ausgelösten Start, mittels beispielsweise einer nicht dargestellten Schalteinrichtung, eines auf diesem Zusatzgerät befindlichen Programms wird über die verfügbaren Kommunikationskanäle des Hostcomputers 200 automatisch die Verbindung zum Dienstanbieter des Dienstes bzw. Angebotes aufgenommen und die Anmeldeprozedur im Hintergrund durchlaufen. Ebenso automatisch startet ein auf dem Zusatzgerät hinterlegtes Anzeigeprogramm für die individualisierten Inhalte. Durch dieses Vorgehen wird der Aufwand zur erstmaligen Nutzung individualisierter webbasierter Inhalte dramatisch reduziert. Auch der wiederholte Zugriff auf diese Inhalte wird dadurch deutlich vereinfacht.

Damit das personalisierte Zusatzgerät 100 auf die webbasierten Inhalte 310 zugreifen kann, ist es insbesondere vorteilhaft, die Kommunikationswege des Hostcomputers 200 zu kennen, an die das Zusatzgerät 100 angeschlossen ist. Dazu wird, wie zuvor beschrieben, vor der eigentlichen Anmeldeprozedur das auf dem Zusatzgerät 100 befindliche Programm 121 aufgerufen, das die relevanten Netzwerkparameter identifizieren und entsprechende Einstellungen vornehmen kann.

Da es sich bei dem Zusatzgerät 100 um eine personalisierte Variante handelt, können die personalen Registrierungsmerkmale auf dem Zusatzgerät 100 bereits bei der Produktion abgespeichert werden. Es wird also gewissermaßen nicht der Benutzer selber registriert, sondern das individualisierte Zusatzgerät 100 mittels seiner eindeutigen Kennung. Bei der Übergabe des Gerätes 100 an den Benutzer kann der Dienstanbieter diese Kennung mit den Daten des Benutzers verknüpfen und damit die für diesen Benutzer zugreifbaren Inhalte personalisieren. Damit entfällt der Registrierungsaufwand, der nach dem Stand der Technik notwendig ist, vollständig. Die Kennung kann die zuvor erwähnte Hardware-ID 114 sein oder diese beinhalten.

Will der Benutzer nun die Inhalte des Dienstanbieters nutzen, so muss er lediglich das Zusatzgerät 100 mit einem beliebigen Hostcomputer 200 verbinden. Je nach Konfiguration werden die auf dem Zusatzgerät 100 befindlichen Programme automatisch gestartet oder können durch einen einzigen Schalter des Hostcomputers 200 manuell gestartet werden. Alle weiteren Schritte der Anmeldung, wie Öffnen eines geeigneten Anzeigegerätes, wie beispielsweise die zuvor genannte Anzeigeeinrichtung 150, Eingabe der Zugangsadresse des Dienstanbieters, Eingabe der Benutzerkennung und Eingabe des Passwortes, sowie die Übertragung dieser Daten werden automatisch vorgenommen.

Diese Übertragung kann gegebenenfalls verschlüsselt geschehen. Je nach Zugangsmechanismus des Dienstanbieters ist damit die Anmeldung vollständig abgeschlossen, oder sie kann durch Betätigen eines einzigen Schalters abgeschlossen werden.

Abhängig vom Zugangsmechanismus des Dienstanbieters kann dieser auch eigenständig die Identität des Benutzers ermitteln. Dies geschieht über ein für den Dienstanbieter zugreifbares Datenpaket, das bei einer früheren erfolgreichen Anmeldung vom Dienstanbieter beim Benutzer hinterlegt wurde. Nach dem Stand der Technik ist dafür eine mindestens einmalige und erfolgreiche Anmeldung des Benutzers notwendig. Wird dieses Verfahren vom Dienstanbieter unterstützt, so kann das entsprechende Datenpaket bereits vor Auslieferung auf dem Zusatzgerät 100 abgelegt werden. Diese alternative Anmeldeprozedur steht damit dem Benutzer im Gegensatz zum Stand der Technik sofort ab der ersten Nutzung zur Verfügung.

Besteht Interesse daran, das Duplizieren des Zusatzgerätes 100 zu unterbinden, wie zum Beispiel die Nutzung eines kommerziellen Dienstes durch mehrere Benutzer über einen einzigen Zugang, so kann die Anmeldeprozedur um einen Schritt erweitert werden, in dem neben der Benutzerkennung und dem Passwort zusätzlich eine eindeutige Identifikationsnummer aus der Hardware des Zusatzgerätes 100 ausgelesen wird und durch den Dienstanbieter überprüft wird. Dazu ist es notwendig, dass der Dienstanbieter bei der Produktion des Zusatzgerätes seine Seriennummer ermittelt und diese mit der entsprechenden Benutzerkennung und Passwort verknüpft. Auf diese Weise kann ein Kopierschutz bewerkstelligt werden.

Das Gerät kann hardwaremäßig beispielsweise als USB-Speicherkarte, USB-MP3-Spieler, USB-Festplatte, Firewire Festplatte, Bluetoothtelefon mit Speicherfunktion, Speicherkarte in Telefon (für mobile Anwendung), Datenträger, die über beliebige Funktechniken angebunden werden (RFID, ZigBee, enOcean, DECT, GSM, UMTS, CDMA, etc...), ausgeführt sein.

Der zuvor mit Hostcomputer 200 bezeichnete Computer kann beispielsweise ein Personalcomputer (PC), ein Macintosh-Computer, ein Server, ein Mobiltelefon, ein Persönlicher Digitaler Assistent (PDA), ein mobiles Navigationssystem (Personal Navigation Assistent = PNA), oder ein Fahrzeugrechner sein.

Das mittels der Anzeigeeinrichtung 150 genutzte Anzeigeprogramm kann beispielsweise ein FTP-Browser, ein Webbrowser, ein Terminalfenster, oder ein WAP-Browser sein.

Es sind die folgenden Sicherheitsstufen bzw. Sicherheitswerkzeuge denkbar:
- Benutzerkennung und Passwort werden automatisiert übertragen,
- zusätzlich werden biometrische oder biomorphologische Daten übertragen, und
- zusätzlich, oder alternativ dazu, werden RAS-Token, Transaktionsnummer (TAN), oder weitere Sicherheitsmerkmale übertragen.

Ganz allgemein handelt es sich also um ein Gerät 100, das mit einem Hostcomputer 200 verbunden werden kann und in dem Zugangsberechtigungsdaten 112 für den Zugang zu bestimmten zugriffsgeschützten, (individualisierten,) netzbasierten Angeboten bzw. Diensten abgelegt sind.

Alle zuvor beschriebenen Merkmale des Geräts 100 und des Verfahrens können einzeln als auch in beliebiger Kombination Verwendung finden. Insbesondere sind auch die folgenden Modifikationen in beliebiger Kombination möglich.

Das Gerät 100 kann über eine drahtgebundene und/oder eine optische, und/oder eine Funkschnittstelle, und/oder eine induktive, und/oder eine kapazitive Schnittstelle mit dem Hostcomputer 200 verbunden werden.

Das Gerät 100 kann in einer der genannten Speichereinrichtungen 110, 120 hinreichende Informationen speichern, wo der Anmeldebereich für die bestimmten zugriffsgeschützten, (individualisierten,) netzbasierten Dienste hostcomputerübergreifend erreicht werden kann. Das heißt in dem Speicherbereich kann die Webadresse der bestimmten zugriffsgeschützten, (individualisierten,) netzbasierten Dienste hinterlegt sein. Vorzugweise ist das Gerät 100 derart ausgestaltet, dass es die Informationen zur Erlangung des Zugriffs durch den Hostcomputer automatisch heranzieht.

Die Cookies 113 können automatisch wiederhergestellt werden. Dazu kann das Gerät 100 mit einer (nicht dargestellten) Wiederherstellungseinrichtung versehen sein, die die vom Dienstanbieter gelieferten Informationspakete zu Beginn jeder Nutzung des Gerätes 100 aus einer Sicherungskopie heraus wiederherstellt.

Die Wiederherstellungseinrichtung, oder eine weitere Wiederherstellungseinrichtung, kann auch die Zugangsberechtigungsdaten 112 zu den bestimmten zugriffsgeschützten, (individualisierten,) netzbasierten Diensten zu Beginn jeder Nutzung des Gerätes 100 aus einer Sicherungskopie wiederherstellen.

Zudem kann die Wiederherstellungseinrichtung, oder eine weitere Wiederherstellungseinrichtung, die Gerätesoftware im Fehlerfall aus einer schreibgeschützten Sicherungskopie automatisch wiederherstellen. Hierzu wird ein Bild aus einem schreibgeschützten Teil bzw. Partition der ersten und/oder zweiten Speichereinrichtung 110 und/oder 120 des Geräts auf einen nichtschreibgeschützten bzw. offenen Teil bzw. Partition der Speichereinrichtungen 110 und/oder 120 des Geräts 100 entpackt. Gegebenenfalls wird das Bild am Ende gesichert, wenn es sinnvoll geändert wurde.

Es ist auch möglich, das Gerät 100 mit einer ebenfalls nicht dargestellten Aktualisierungseinrichtung auszustatten, die zu Beginn der Verwendung an einem zuvor definierten Ort im Datennetzwerk nach aktuelleren Versionen der Gerätesoftware oder Teilen der Gerätesoftware sucht und bei Vorhandensein die im Gerät 100 vorhandenen Versionen aktualisiert.

Hierzu kann das Gerät 100 in der Lage sein, geräteindividuelle Aktualisierungen vorzunehmen. Somit ist eine Aktualisierung mit individuellen Daten, z.B.: Änderungen des hinterlegten Passwortes, oder ein Update der Zugangsberechtigung, z.B. Sperrung des Zugangs möglich.

Zur Nutzung ortsabhängiger Dienste kann das Gerät 100, wenn es über eine drahtlose Schnittstelle mit dem Hostcomputer 200 verbunden wird, den Zugang mittels der drahtlosen

Schnittstelle zu von den bestimmten zugriffsgeschützten, (individualisierten,) netzbasierten Diensten einem Hostcomputer 200 genau dann gestatten, wenn sich der Hostcomputer 200 in räumlicher Nähe zum Gerät 100 befindet. Damit kann beispielsweise ein Zugang zu individualisiertem Webinhalt über ein Mobiltelefon oder einen Laptop gewährleistet werden, sobald sich der Benutzer in einem bestimmten Hotelzimmer oder in einem Mietwagen befindet, etc.

Als eine weitere Möglichkeit des Geräts 100 ist beispielsweise Haushaltsgerät, insbesondere eine Waschmaschine, Kaffeemaschine etc. denkbar, welche dem Benutzer über ein auf Energieversorgungsleitungen basierendes Lokales Netzwerk (PowerLAN), Bluetooth, o.Ä. ein Laufwerk zur Verfügung stellt, auf welchem der konfigurierte Browser liegt, der ihn auf die geräteindividuelle Webseite führt. Von dort hat der Benutzer Zugriff auf einen Ersatzteilkatalog, Servicedaten, etc. der Waschmaschine. Alternativ kann das Haushaltsgerät mit einem Gerätepass in Form einer USB-Karte ausgestattet sein, die bei Einstecken in den Hostcomputer 200 den Zugang wie oben ermöglicht.

Bei dem Gerät 100 kann die Zugangsberechtigung über zwei unabhängige Instanzen erteilt werden. Hierbei kann eine dieser Instanzen den statischen Teil der Zugangsberechtigungsdaten 112 überprüfen und die andere Instanz den dynamisch geänderten Teil überprüfen. Beispielsweise ist eine Überprüfung von Passwort und Kennwort durch den Dienstanbieter, eine Überprüfung von Pfandtoken 115 (ggf. verknüpft mit Hardware-Identifikationsnummer) durch einen Dritten denkbar. Bei einem Anmeldeversuch bei dem zugangsgeschützten Bereich des Dienstanbieters erfolgt eine Anfrage durch den Dienstanbieter bei dem Dritten. Sobald der Pfandtoken 115 und ggf. die Hardware-Identifikationsnummer positiv überprüft sind, erfolgt eine positive Antwort an den Dienstanbieter, worauf dieser den Zugang freischaltet.

Um das Gerät 100 zur ersten Verwendung freizuschalten, kann das Gerät 100 mit einer ebenfalls nicht dargestellten Sicherungseinrichtung ausgestattet sein, welche die Nutzung erst nach Eingabe eines gesondert bereitgestellten Codes freischaltet. Auf diese Weise ist es möglich, den Missbrauch einer Karte zu unterbinden, die auf dem Versandweg zum Benutzer verloren geht oder gestohlen wird.

Zur Nutzung mehrerer Profile kann das Gerät 100 geeignet sein, durch Umschaltung den Zugang zu jeweils voneinander unabhängigen Diensten zu ermöglichen. Die Umschaltung kann über Hardware oder Software erfolgen. Dies kann vorteilhaft sein, wenn mehrere Zugänge zu verschiedenen Dienstanbietern desselben Benutzers, oder Zugänge verschiedener Benutzer vorhanden sind. Im letzten Fall kann die Umschaltung gegebenenfalls zusätzlich durch ein Passwort gesichert sein.

Auch wenn zuvor eine erste und eine zweite Speichereinrichtung 110 und 120 genannt sind, sei es erwähnt, dass das Gerät 100 auch nur eine Speichereinrichtung aufweisen kann, in welcher alle Daten gespeichert sind, die zuvor im Zusammenhang mit der ersten und zweiten Speichereinrichtung 110 und 120 genannt sind.

Zudem muss die Bestimmungseinrichtung 131 nicht Teil der Kommunikationsaufbaueinrichtung 130 sein, sondern kann neben der Kommunikationsaufbaueinrichtung 130 in das Gerät 100 eingebunden sein.

Anstelle der ersten und zweiten Verschlüsselungseinrichtung kann auch nur eine Verschlüsselungseinrichtung bereitgestellt sein, welche die Aufgaben der ersten und zweiten Verschlüsselungseinrichtung übernimmt. Gleichermaßen kann anstelle der ersten und zweiten Entschlüsselungseinrichtung auch nur eine Entschlüsselungseinrichtung bereitgestellt sein, welche die Aufgaben der ersten und zweiten Entschlüsselungseinrichtung übernimmt.

### Bezugszeichenliste

- 100: Gerät
- 110: Erste Speichereinrichtung
- 111: Dynamische Rundsendeidentifikationsdaten RFID dyn
- 112: Zugangsberechtigungsdaten
- 113: Cookies
- 114: Hardware-ID
- 115: Pfandtoken
- 116: Statische Rundsendeidentifikationsdaten RFID stat
- 117: Zertifikate
- 120: Zweite Speichereinrichtung
- 121: Programm zur Ausführung einer Dienstanmeldeprozedur
- 130: Kommunikationsaufbaueinrichtung
- 131: Bestimmungseinrichtung
- 140: Steuereinrichtung
- 141: CPU
- 142: ROM
- 143: RAM
- 150: Anzeigeeinrichtung
- 160: Eingabeeinrichtung
- 170: Anmeldeeinrichtung
- 200: Hostcomputer
- 210: Allgemeine Benutzerschnittstelle GUI
- 300: Webserver
- 310: Webinhalte
- 400: Authentifizierungsserver
- 500: RFID-Gerät
- S210-S527: Verfahrensschritte

## Patentansprüche

1. Gerät (100) zur Erstellung eines sicheren Zugangs zu einem webbasierten zugangsbeschränkten Dienst, bei welchem ein Dienstanbieter im Web vorbestimmte Webinhalte (310) nur über einen mit Sicherheitswerkzeugen gesicherten Zugang bereitstellt, mit
einer ersten Speichereinrichtung (110), in welcher Zugangsberechtigungsdaten (112) für den Zugang zu dem webbasierten zugangsbeschränkten Dienst gespeichert sind,
einer Kommunikationsverbindungsaufbaueinrichtung (130) zum Aufbau einer Kommunikationsverbindung zu dem Dienstanbieter über Kommunikationseinrichtungen eines Hostcomputers (200), wenn das Gerät (100) an den Hostcomputer (200) angeschlossen wird,
einer Anmeldeeinrichtung (170) zur Steuerung einer Dienstanmeldeprozedur zur Erstellung des sicheren Zugangs zu dem webbasierten zugangsbeschränkten Dienst über die aufgebaute Kommunikationsverbindung auf der Grundlage der in der Speichereinrichtung (110) gespeicherten Zugangsberechtigungsdaten (112), und
einer Steuereinrichtung (140) zur Steuerung der Kommunikation zwischen Gerät (100) und Hostcomputer (200) über die aufgebaute Kommunikationsverbindung.

2. Gerät nach Anspruch 1, wobei die Kommunikationsverbindungsaufbaueinrichtung (130) eine Bestimmungseinrichtung (131) aufweist zur Bestimmung von verfügbaren Kommunikationseinrichtungen des an das Gerät (100) anschließbaren Hostcomputers (200), wenn an das Gerät (100) ein Hostcomputer (200) angeschlossen ist.

3. Gerät nach Anspruch 1 oder 2, zudem mit einer Berücksichtigungseinrichtung zur automatischen Berücksichtigung der von der Bestimmungseinrichtung (131) bestimmten verfügbaren Kommunikationseinrichtungen des Hostcomputers (200).

4. Gerät nach einem der vorangehenden Ansprüche, wobei die Sicherheitswerkzeuge eine Benutzerkennung und/oder ein Passwort und/oder biometrische oder biomorphologische Daten und/oder ein Pfandtoken (115) und/oder eine Transaktionsnummer sind.

5. Gerät nach einem der vorangehenden Ansprüche, zudem mit einer Anzeigeeinrichtung (150) zur Anzeige der von dem Dienstanbieter bereitgestellten Webinhalte (310), wobei die Anzeigeeinrichtung (150) die graphische Benutzerschnittstelle des Hostcomputers (200) zur Anzeige der Webinhalte (310) verwendet.

6. Gerät nach einem der vorangehenden Ansprüche, zudem mit einer Eingabeeinrichtung (160) zur Eingabe ergänzender Zugangsberechtigungsdaten.

7. Gerät nach einem der vorangehenden Ansprüche, zudem mit
einer ersten Verschlüsselungseinrichtung zur Verschlüsselung der Zugangsberechtigungsdaten, so dass die Zugangsberechtigungsdaten in der Speichereinrichtung für einen Benutzer des Geräts nicht zugreifbar und/oder nicht lesbar gespeichert sind, und
einer ersten Entschlüsselungseinrichtung zur Entschlüsselung der Zugangsberechtigungsdaten, so dass die Zugangsberechtigungsdaten in der Speichereinrichtung für einen Benutzer des Geräts zugreifbar und/oder lesbar gespeichert sind.

8. Gerät nach einem der vorangehenden Ansprüche, wobei in der Speichereinrichtung Adressdaten des Dienstanbieters des webbasierten zugangsbeschränkten Diensts gespeichert sind, wobei das Gerät zudem umfasst
eine zweiten Verschlüsselungseinrichtung zur Verschlüsselung der Adressdaten des Dienstanbieters, so dass die Adressdaten des Dienstanbieters in der Speichereinrichtung für einen Benutzer des Geräts nicht zugreifbar und/oder nicht lesbar gespeichert sind, und
einer zweiten Entschlüsselungseinrichtung zur Entschlüsselung der Adressdaten des Dienstanbieters, so dass die Adressdaten des Dienstanbieters in der Speichereinrichtung für einen Benutzer des Geräts zugreifbar und/oder lesbar gespeichert sind.

9. Gerät nach einem der vorangehenden Ansprüche, zudem mit einer Migrationseinrichtung, die dahingehend ausgestaltet ist, dass sie alle für den Zugang zu dem webbasierten zugangsbeschränkten Dienst notwendigen Informationen und Einstellungen auf den Hostcomputer (200) überträgt und dort lokal speichert, so dass ein Zugriff durch den Hostcomputer (200) auf den webbasierten zugangsbeschränkten Dienst zukünftig auch ohne das Gerät (100) möglich ist.

10. Verfahren zum Erstellen eines sicheren Zugangs zu einem webbasierten zugangsbeschränkten Dienst, bei welchem ein Dienstanbieter im Web vorbestimmte Webinhalte (310) nur über einen mit Sicherheitswerkzeugen gesicherten Zugang bereitstellt, mit
Speichern, in einer ersten Speichereinrichtung (110), von Zugangsberechtigungsdaten (112) für den Zugang zu dem webbasierten zugangsbeschränkten Dienst,
Aufbauen einer Kommunikationsverbindung zu dem Dienstanbieter über Kommunikationseinrichtungen eines Hostcomputers (200), wenn das Gerät (100) an den Hostcomputer (200) angeschlossen wird, und
Steuern einer Dienstanmeldeprozedur zur Erstellung des sicheren Zugangs zu dem webbasierten zugangsbeschränkten Dienst über die aufgebaute Kommunikationsverbindung auf der Grundlage der in der ersten Speichereinrichtung (110) gespeicherten Zugangsberechtigungsdaten (112).
